Europäisches Patentamt

European Patent Office

Office européen des brevets

(19)

(11) Publication number: **0 030 522**
A2

# (12) EUROPEAN PATENT APPLICATION

(21) Application number: **80830099.0**

(22) Date of filing: **25.11.80**

(51) Int. Cl.³: **E 04 C 2/20**

(30) Priority: **07.12.79 IT 2793179**

(43) Date of publication of application: **17.06.81**
**Bulletin 81/24**

(84) Designated Contracting States: **CH DE FR GB LI SE**

(71) Applicant: **Ciccotelli, Luciano, Via San Gottardo, 56, Monza (Milan) (IT)**

(72) Inventor: **Ciccotelli, Luciano, Via San Gottardo, 56, Monza (Milan) (IT)**

(74) Representative: **Calvani, Domenico, UFFICIO BREVETTI ING. CALVANI, SALVI & VERONELLI 4, Piazza Duca d'Aosta, I-20124 Milan (IT)**

(54) **A self supporting panel of polyurethane resins or the like, a manufacturing method thereof and an apparatus used therewith.**

(57) A self supporting panel particularly suitable for use in the building industry, consists of an enbloc structure having a central core and a peripheral frame and is fabricated from polyurethane resins or the like with different densities in the core and frame, the panel structure perferably comprises protective and/or decorative coating sheets covering both the core and frame, said frame being manufactured in such a manner that it completely and permanently adheres to the core and to the coating sheets, due to an intramolecular fusion which takes place amongst the panel constituents contacting surfaces.

This invention concerns a self supporting panel made from polyurethane resins or the like and a manufacturing method thereof.

It is well known that self supporting panels are widely used in building industry, either in building erection or as partition walls or in other possible applications.

The known self supporting panels are generally formed by two properly shaped components combined and fastened together, these elements forming a central core or body and a peripheral frame.

Said central core and peripheral frame are generally fabricated from different materials and are fastened together so to give a panel having sufficient mechanical strength and working life. The manufacturing systems of course attempt to be simple and relatively inespensive, but this is not satisfactorily reached by the panels on the market.

According to a well known manufacturing system, the panel is fabricated by placing between wall plates machined splines (grooved either before or after assembling); these splines, which constitute the frame, are fastened by adhesives, screws, and/or rivets to the wall plates.Another system fixes frame metal rods to said walls by means of screws, nails or rivets. There are also panelsin which the frame is made from extruded plastic profiles (P.V.C. or other plastic materials) fastened or glued to the plates and central core.

All these known panels show drawbacks related to their structure and thus their mechanical strength, the panel assembling system, their performances when exposed to atmospheric agents, difficulties in manu-facturings and assembling the components of each panel and relatively high costs. Accordingly, an object of this invention is to avoid the above and other drawbacks.

This invention concerns a self supporting panel specially suitable for use in building industry, of the enbloc type with a central core and a peripheral frame, said panel being fabricated from polyurethane resins or the like having different densities at the central core and peripheral frame, said panel structure preferably comprising protective and/or decorative coating sheets covering both the core and frame; said frame being manufactured in such a manner that it completely and permanently adheres to the core and coating sheets, due to an intramolecular fusion which takes place amongst the contact surfaces of panel components.

In particular the expanded polyurethane resin forming said panel core has a low density, while the polyurethane resin forming said frame has a medium or high density and the frame entirely or partially surrounds said core to which is completely and permanently fixed.

The manufacturing method of panels according to the invention substantially comprises two injection molding steps, the first of which consists in the injection, in a mold central cavity, of a polyurethane resin amount capable to expand at low density and form the panel insulating core; during the second step a polyurethane resin amount capable to expand at medium or high density is injected in the mold peripheral cavity so to obtain the panel frame, said second step being carried-out after the end of the core polycondensation and solidification reaction.

When coating sheets are provided for, they advantageously form the mold main walls and then cooperate to define the mold injection cavity.

According to another aspect of this invention, it concerns an adjustable apparatus for sidewardly define and close the mold during both the first core forming and second frame forming injection steps,this apparatus substantially comprising two sets of properly dimensioned and designed adjustable bars, having a suitable cross section so to impart to the core and frame periphery the desired geometry; a first set of adjustable bars being used for core shaping and sizing by properly positioning said coating sheets in order to generate a core injection cavity and form a solid block with said core; while a second set of adjustable bars shapes and sizes the frame according to the second set bar profile; said bar adjustability allowing a bar movement and locking to define the height and width of both panel core and frame.

0030522

Figure 1 is a diagrammatic perspective view of a self supporting panel of rectangular parallelepipedon shape, as made from polyurethane resins of different densities according to the invention.

Figure 2 is an enlarged cross-section of the periphery of panel as shown in Figure 1, but with a frame having a different structure.

Figure 3 is a cross-section similar to that of Figure 2 showing another frame structure.

Figure 4 is a cross-section similar to that of figure 2 showing a frame with plane peripheral surface.

Figure 5 is a cross-section of another type of peripheral frame.

Figure 6 is a cross-section view of a further peripheral frame.

Figure 7 is a diagrammatic view of an adjustable bar set appertaining to a mold peripheral closure apparatus, said set being shown in its condition to obtain the maximum molding working surface.

Figure 8 is a view of the same set of figure 7 when adjusted for a reduced molding working surface.

Figure 9 is a partial perspective and diagrammatic view showing the positioning of bar set of figures 7 and 8 so to have a core molding cavity sidewardly limited by panel coating parallel sheets.

Figure 10 is a perspective diagrammatic view similar to that of figure 9, showing the frame manufacture on a panel core, using a second set of adjustable bars.

Figure 11 is a view showing a manufacturing method of a panel according to this invention, when the panel structure exclusively comprises a core and a frame.

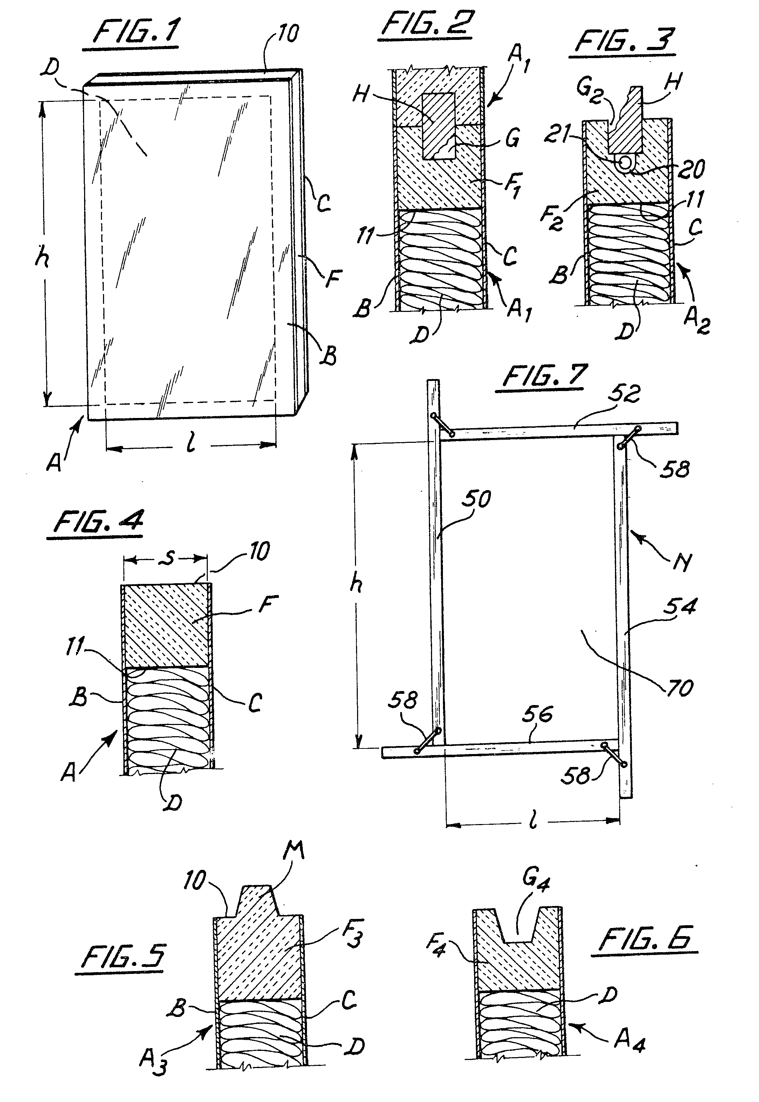

With reference to the drawings, Figures 1 to 6 show a self supporting panel A, as manufactured according to the invention by injection of polyurethane resins having different densities.

Said panel A is essentially formed by:
- two protective and/or decorative coating sheets, the front one is indicated by B and the rear one is indicated by C, these sheets being equal and made of any suitable material, for example, light metal alloys, aluminium, fiber-cement compounds, wood-cement compounds and the like, the two sheets having, in this case, a rectangular shape.

- a parallelepipedon-shaped core D sandwiched between said coating sheets and made of low density expanded polyurethane resin.

- a peripheral frame F completely encompassing said core D, such frame being made from medium or high density expanded polyurethane resins.

. Accordingly, said self supporting panel A is made from four components, namely two coating sheets B and C, core D and frame F, these components forming an enbloc structure as frame F, which has high mechanical strength, completely and permanently adheres at its peripheral surface 11 to core D which has high insulating properties; moreover both core and frame adhere to surfaces of the coating sheets B and C for instance by means of suitable adhesives applied on said sheet surface before injecting the plastic materials forming said core and frame. In particular, a complete adhesion between core D and and frame F takes place due to an intramolecular fusion occurring at the polycondensation and solidification of the core and frame contact surfaces.

As already said, and shown in Figure 11, the panel might be formed by two components only, namely core D and frame F, without sheets B and C. However in absence of said coating sheets, it is advisable to protect the outer surfaces of core D, by applying (by spreading, spraying or by any other fitting system) proper hardening materials capable to stratify and completely adhere to said outer surfaces.

While said central core D generally shows a regular parallelepipedon shape with a height h, a width 1 and a thickness s, which actually corresponds to the final thickness of panel A, the peripheral frame F might have different uniform or irregular shapes, specially in its cross-section, according to the foreseen use of panel. In Figure 4 the frame has a rectangular uniform cross-section, and its peripheral outer side 10 is flush with the corresponding peripheral sides of coating sheets B and C, this uniform section of frame F corresponding to that of Figure 1.

In Figure 2, a panel Al has basically the same structure as panel A but with a frame F1 having a cross-section in which a groove G has been obtained, said groove, which runs all along the frame peripheral development (or only along part of it), housing proper elements as structural stanchions, tenons or similar ones H, which can be inserted in corresponding grooves of adjacent panels A1, for assembling together a number of panels.

Panel A2 of figure 3 has a peripheral frame F2, always forming an enbloc structure with core D and coating sheets B and C, which shows a cross-section with a different configuration. In particular a groove G2, similar to the groove G has an appendix 20 wherein pipes, electrical cables ot the like 21, can be housed for use in the building as obtained by assembling and connecting a number of panels according to this invention.

Figure 5 shows a panel A3 having a frame F3 with a cross-section showing a relief or rise M. Said relief or rise M can be continuous or discontinuous and protrudes outside the peripheral surface 10 of the frame and panel A3.

In Figure 6 a panel A4 has a frame F4 with a groove G4 showing the same cross-section of rise M. It should be noted that a panel frame can have different cross-sections on different sides thereof. For example panel A could have a left vertical side with the frame profile F3 (that is male M) and a right vertical side with the frame profile F4 (that is female G4). As the cross-section of frames F is used to assemble and permanently fix the panels A, such panels will be assembled and fixed by inserting rises M in corresponding grooves G4. When linkage means as grooves G, tenons H, males M or other ones are lacking, or even in presence of such means, the panel assembling and reciprocal fixing can be carried out by means of external clamping means as nails, hooks or other means.

Figure 7 to 9 show the panel injection manufacturing method and the adjustable bar system appertaining to the panel injection mold. A first set N of adjustable bars having suitable lenght, width and cross-section is formed by bars 50, 52, 54 and 56 forming a quadrilateral perimeter, said bars being joined by adjustement and/or locking means which are

0030522

diagrammatically shown with 58. These adjustement and/or locking means can be actuaded by pneumatic or oleodinamic systems at different authomatization levels. Said system N defines the peripheral closure of mould P as will be more detailedly described.

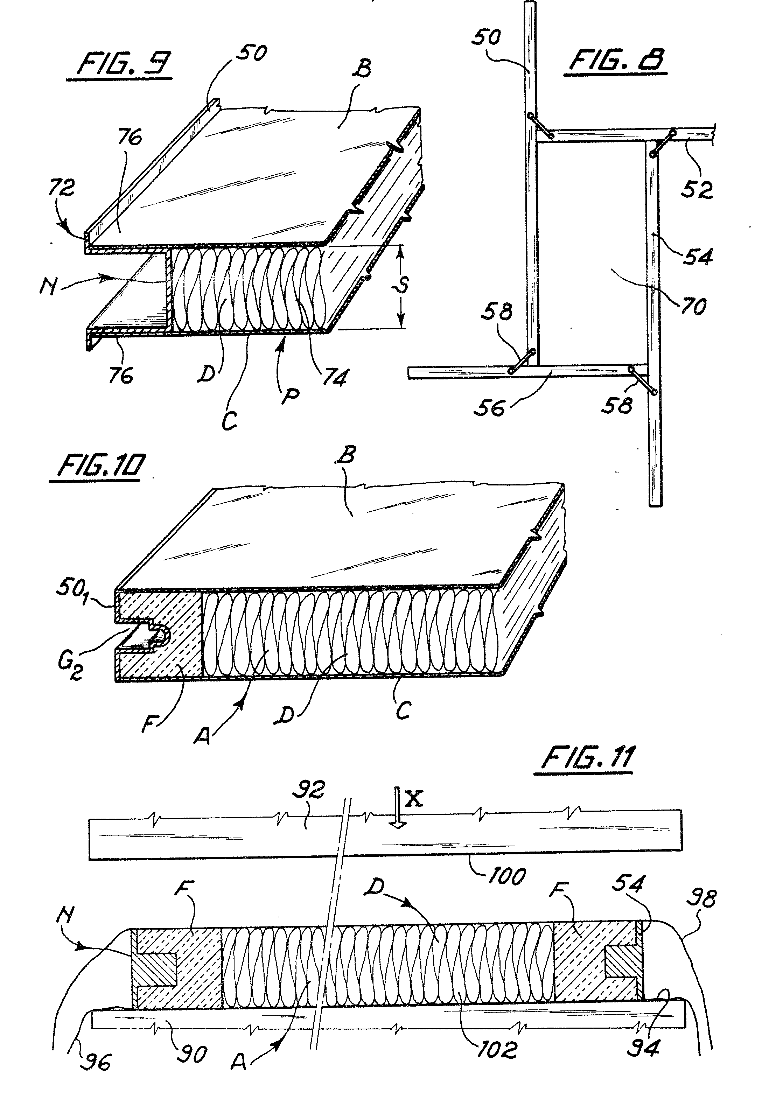

Once the sizes of panel A are defined, the system N, which will limit the peripheral surface of core D, is adjusted so that bars 50 - 56 will define a molding surface 70 having a height h and a width 1 equal to hose of core D while the panel thickness a is defined by the cross-section 72 of the bars belonging to set N (Fig.9). Said cross-section also defines the shape of the periphery of core D. Said bars 50 -56 are then locked in their reciprocal position by locking means 58. The mold central cavity 74 can be completed by joining to the bars 50 - 56 said coating sheets B and C, which rest and adhere on related bar zones with their edges 76. Obviously the so obtained cavity 74 will be kept closed and clamped until the first molding step of panel A is completed. The molding phase is carried-out by injecting into cavity 74 a polyurethane resin of proper formulation which expands so to give a low density body completely filling the cavity and adhering to the inner surfaces of sheets B and C possibly treated with proper adhesives.

Once the polycondensation reaction is completed and core D is made solid (core D peripheral surfaces are plane) the mold is opened and, upon releasing locking means 58, bars 50 - 56 are removed. The bars of a second bar set are then positioned (only bar $50_1$ is shown); this second adjustable set is analogous to and works like set N. Each bar of the second set has a shaped cross-section, so to define the peripheral surface 10 of frame F. In the case of Figure 10, the crosssection of bar $50_1$ gives to the peripheral surface of frame F the same shape as shown in Figure 3, with groove G2. The bars of said second adjustable set are positioned in correspondence of the edges of sheets B and C so to define a perimetral cavity of the mold, which is closed on the upper and lower sides by sheets B and C and sidewardly by the bars of said second adjustable set. The required amount of a second polyurethane resin, capable to expand and give a product with a medium or high density, is now injected so that this resin will fill all the above described perimetral cavity and form the frame F of panel A.

At the end of the polycondensation reaction of this mass a complete and permanent adhesion between the contacting surfaces 11 of core D and frame F will be obtained due to an intramolecular fusion of the polyurethane masses forming the core and the frame. As an adhesion to sheets B and C is also obtained, an enbloc structure is then formed. The bars of said second adjustable set can be released for obtaining a panel ready to be used.

Figure 11 diagrammatically shows the molding of a panel A formed by a core D and frame F secured together, without sheets B and C. In this case a press is used, having a lower table 90 and an upper table 92. On the surface 94 of table 90 a polyethylene foil (or a foil of other suitable material) 96 is located and subsequently a bar set N is positioned so to enclose the panel perimeter, the bars of set N being adjusted to the required panel sizes. On the bars of set N a second polyethylene foil (or a foil of a suitable material) 98 is located and the first injection phase of the polyurethane resins takes place, after the lowering of table 92 in the direction of arrow X so to define (with surfaces 100 , 94 and inner surfaces of bars) a mold cavity 102. A required amount of polyurethane resin, capable to expand so to give a low density core, is then injected so to manufacture the core D of panel A (first phase). Once the injected mass is solidified the adjustable bar set is released and detached from the core perimetral zone, while maintaining tables 90 and 92 stationary. A second set N of adjustable bars is now positioned between tables 90 and 92 so to define a peripheral cavity for moulding the frame F. Each bar of this set has a properly shaped cross-section for the above described purposes. A polyurethane resin, capable to expand so to give a medium or high density product is now injected (second phase) and once this mass is solidified a complete and permanent adhesion between core D and frame F is obtained. At this point table 92 is rised, in a direction contrary to arrow

0030522

X, and set N is released. Thanks to the presence of the polyethylene foils 96, 98, the polyurethane resins can be completely detached from said foils as well as from tables 90 and 92, so that a complete panel, as formed only by core D and frame F, can be directly utilized.

The panel of this invention does not need special preserving treatments against atmospheric agents with special regard to the air moisture thanks to the inherent properties of the materials; it does not give problems of dimentional instability caused by environment thermic variations, partially eliminates the problem of "thermal bridges" as it is an enbloc thermoinsulating structure, and eliminates the need to utilize adhesive or mechanical means to fasten together frame, core and coating sheets.

Moreover the panel assembling and the finishing of the products manufactured with the panels, are noticeably made easy as these panels show high mechanical and physical properties.

Moreover, the manufacturing and utilization details could undergo to many modifications without departing from the spirit and scope of this invention.

0030522

CLAIMS

1. A self supporting panel, in particular for use in building industry, of the type having an enbloc structure of polyurethane resins or the like with a central core and a peripheral frame, wherein said resins have different densities in the core and respectively the frame; said frame being obtained during the panel manufacture so that it completely and permanently adheres to the core due to an intramolecular fusion and penetration taking place during injection amongst the contacting surfaces of the panel components.

2. A panel according to claim 1, wherein the expanded polyurethane resin forming said core has a low density, whereas the polyurethane resin forming said frame has a medium or high density, such frame completely or partially enclosing said core to which it is completely and permanently bonded.

3. A panel according to claim 2, and comprising coating sheets having protective or decorative functions which include between them said core and frame, and are permanently bonded to the same by intramolecular fusion as obtained during the core and frame injection.

4. A manufacturing method of a polyurethane resin panel according to at least one of the preceding claims, and comprising the steps of injection molding, in the central cavity of a suitable mold, a polyurethane resin capable to expand and give a low density panel core; and of subsequently injection molding, in a peripheral cavity of the same mold, a polyurethane resin capable to expand and give a medium or high density panel frame, said second injection molding being carried-out once the polycondensation and solidification reaction of the core material is terminated.

- 2 -

0030522

5. A method according to claim 4, wherein the mold main walls are formed by the same core and frame coating sheets which constitute, during the plastic material injection, a part of the injection mold.

6. An apparatus for side defining and closing a mold as used during the first and second polyurethane injections according to the method of claim4 or 5, said apparatus comprising two sets of properly sized and shaped adjustable bars with proper cross-sections so to define both a core perimeter and a frame perimeter of the required shape; the first set of adjustable bars having the purpose to size and shape the core in cooperation with said coating sheets which will form an enbloc structure with the core, while the second set of adjustable bars has the purpose to size and shape the frame according to the shape of the set bars; the adjustability of the bars in said two sets allowing their approaching or spreading motion as well as their reciprocal locking, so to define the height and width of said core and frame.

7. A panel according to claim 1, wherein the crosssection of the frame is shaped so to allow a panel assembing with other similar or identical panels; such section can show grooves, rises or the like on its outer sides.

8. A panel according to claim 1, wherein the frame grooves are so shaped to allow the housing of both structural or binding elements, as tenons or the like, and pipes, cables or the like for services in the building.

_FIG.1_

_FIG.2_

_FIG.3_

_FIG.7_

_FIG.4_

_FIG.5_

_FIG.6_

0030522

FIG. 9

FIG. 8

FIG.10

FIG.11